# EUROPÄISCHE PATENTSCHRIFT

(11) **EP 2 912 338 B1**
(45) Veröffentlichungstag und Bekanntmachung des Hinweises auf die Patenterteilung: **31.07.2019**
(21) Anmeldenummer: 13777223.2
(22) Anmeldetag: 24.09.2013
(51) Int. Cl.: F16F 15/123

(54) **DREHSCHWINGUNGSDÄMPFER**
TORSIONAL VIBRATION DAMPER
AMORTISSEUR DE VIBRATIONS DE TORSION

(30) Priorität: 25.10.2012 DE 102012219531
(43) Veröffentlichungstag der Anmeldung: 02.09.2015
(73) Patentinhaber: Schaeffler Technologies AG & Co. KG, 91074 Herzogenaurach (DE)
(72) Erfinder: SILVA, Júlio, Cordeiro, da, CEP - 18053-363 Sorocaba (BR); CAMARA, Guilherme, 18051-250 Sorocaba (BR)
(86) Internationale Anmeldenummer: PCT/DE2013/200186
(87) Internationale Veröffentlichungsnummer: WO 2014/063694

(56) Entgegenhaltungen:
- DE-A1- 1 600 077
- DE-A1- 10 231 500
- JP-A- S59 180 125
- US-A- 4 027 757

## Beschreibung

Die Erfindung betrifft einen Drehschwingungsdämpfer mit einem als Flanschteil ausgebildeten Ausgangsteil und einem aus zwei das Flanschteil flankierenden Scheibenteilen gebildeten Eingangsteil sowie zwischen einer bei Relativverdrehung von Eingangsteil und Ausgangsteil um eine gemeinsame Drehachse wirksame Federeinrichtung, die aus in dem Flanschteil und in den Scheibenteilen angeordneten Fenstern untergebrachten Druckfedern gebildet ist.

Gattungsgemäße Drehschwingungsdämpfer sind insbesondere aus Anwendungen in Kupplungsscheiben, wie sie beispielsweise in der DE 43 32 936 A1 gezeigt sind, bekannt. Hierbei dient ein Flanschteil, das beispielsweise auf einer Nabe aufgenommen ist, als Ausgangsteil gebildet und wird von zwei das Eingangsteil bildenden Scheibenteilen flankiert. Zur Ausbildung einer Schwingungsdämpfungsfunktion sind Ausgangsteil und Ausgangsteil um eine gemeinsame Drehachse gegeneinander begrenzt verdrehbar vorgesehen, wobei in Umfangsrichtung zwischen diesen eine Federeinrichtung und gegebenenfalls eine Reibeinrichtung wirksam sind. Die Federeinrichtung bilden dabei Druckfedern, die in aus den Scheibenteilen und dem Flanschteil ausgenommenen Fenstern aufgenommen sind. Die Fenster bilden dabei jeweils die Druckfedern endseitig beaufschlagende Anschläge, so dass diese bei einer Relativverdrehung von Ausgangs- und Eingangsteil komprimiert werden und damit bei auftretenden Drehmomentspitzen kinetische Energie als potentielle Energie speichern und bei Drehmomenttälern diese wieder in Form von kinetischer Energie abgeben, so dass insgesamt ein ausgeglichener Drehmomentfluss erzielt wird. Die Druckfedern sind dabei verliersicher in den Fenstern aufgenommen, indem radial außen Abstützungen aus den Scheibenteilen ausgestellt sind. Um diese stabil auszubilden, sind die Scheibenteile mit einem umlaufenden Umfang vorgesehener Stärke versehen, so dass die Scheibenteile einen großen Durchmesser aufweisen und gegebenenfalls sich radial an eines der Scheibenteile anschließende Reibbeläge bezüglich ihres Innendurchmessers begrenzt sind. Weiterhin ist ein hoher Materialeinsatz zur Herstellung der aus Blech gestanzten und kalt umgeformten Scheibenteile notwendig.

Das Dokument US 4, 027, 757 wird als der nächstliegende Stand der Technik angesehen, und offenbart alle Merkmale des Oberbegriffs des Anspruchs 1.

Aufgabe der Erfindung ist daher, einen Drehschwingungsdämpfer vorzuschlagen, der kostengünstiger und bezüglich seines Bauraums verbessert ausgebildet ist.

Die Aufgabe wird durch den Gegenstand des Anspruchs 1 gelöst. Die von diesem abhängigen Unteransprüche geben vorteilhafte Ausführungsformen wieder.

Der vorgeschlagene Drehschwingungsdämpfer enthält ein als Flanschteil ausgebildetes Ausgangsteil und ein aus zwei das Flanschteil flankierenden, miteinander verbundenen Scheibenteilen gebildetes Eingangsteil sowie zwischen einer bei Relativverdrehung von Eingangsteil und Ausgangsteil um eine gemeinsame Drehachse wirksame Federeinrichtung, die aus in dem Flanschteil und in den miteinander verbundenen Scheibenteilen angeordneten Fenstern untergebrachten Druckfedern gebildet ist. Hierbei sind zumindest axial wirksame, erste Abstützungen der Druckfedern eines Scheibenteils aus dem Material der Fenster ausgestellt und radial innen mit dem Scheibenteil verbunden. In bevorzugter Weise sind dabei die Fenster des Scheibenteils mit den ersten Abstützungen radial außen offen ausgebildet, so dass ein besonders kleiner Durchmesser des Scheibenteils mit den ersten Abstützungen erzielt werden kann. Die radiale Abstützung der Druckfedern unter Fliehkraft kann dabei mittels des Flanschteils und/oder des anderen Scheibenteils erfolgen. Bevorzugt dieses andere Scheibenteil kann dabei Reibbeläge zur Ausbildung einer Kupplungsscheibe tragen, so dass deren radial durch die geschlossenen Fenster erweiterter Bauraum nicht ins Gewicht fällt. Hierbei kann dieses Scheibenteil radial äußere, zweite Abstützungen der Druckfedern an den Fenstern enthalten, die aus den Fenstern radial außen am Scheibenteil verbunden ausgestellt sind.

Die ersten Abstützungen sind gattungsgemäß länger als eine radiale Erstreckung der Fenster ausgebildet, so dass diese die Druckfedern über den Umfang deren Mittellinie hinaus radial übergreifen und damit einen weiteren Anteil an radialer Abstützung aufbringen. Hierzu können bei radial außen offenen Fenstern die ersten Abstützungen bei einem größeren Durchmesser ausgestanzt sein. Um Material zu sparen, können diese auf demselben Durchmesser wie dem Außenumfang des Scheibenteils ausgestanzt und mittels eines Streckverfahrens radial ausgezogen werden. Hierbei kann von Vorteil sein, wenn ein endseitiges Abstützteil der ersten Abstützungen in Umfangsrichtung betrachtet breiter als ein diese mit dem Scheibenteil verbindender Steg ausgebildet ist.

Zur Ausbildung einer möglichst hohen Federkapazität bei gleichzeitig ausreichender Steifigkeit der Scheibenteile und des Flanschteiles, hat sich als vorteilhaft erwiesen, wenn zwischen drei und sechs, bevorzugt fünf über den Umfang verteilte, jeweils in dem Flanschteil und den Scheibenteilen eingebrachte, Druckfedern aufnehmende Fenster vorgesehen sind. Hierbei können in den Fenstern einfache oder mehrere ineinander geschachtelte Druckfedern aufgenommen sein. Neben einer gegebenenfalls zusätzlich auf einem bevorzugt kleineren Durchmesser angeordneten weiteren Federeinrichtung zu Bildung einer Leerlaufdämpferstufe die in den Fenstern aufgenommene Federeinrichtung zwei- oder mehrstufig ausgebildet wer-den, indem in als Außenfedern ausgebildete Druckfedern in sich eine oder mehrere Innenfedern aufnehmen, die unterschiedlich lang ausgebildet sind, so dass eine Beaufschlagung der Druckfedern durch die Anschläge der Fenster bei unterschiedlichen Verdrehwinkeln der Scheibenteile gegenüber dem Flanschteil erfolgt und damit eine zwei- oder mehrstufige Kennlinie des Drehschwingungsdämpfers ausgebildet wird.

Die Erfindung wird anhand des in den Figuren 1 bis 6 dargestellten Ausführungsbeispiels näher erläutert. Dabei zeigen:
- Figur 1: eine geschnittene 3D-Teilanschicht eines Drehschwingungsdämpfers,
- Figur 2: einen Teilschnitt durch den Drehschwingungsdämpfer der Figur 1,
- Figur 3: eine 3D-Außenansicht eines Scheibenteils des Drehschwingungsdämpfers der Figuren 1 und 2,
- Figur 4: eine 3D-Innenansicht des Scheibenteils der Figur 4,
- Figur 5: eine Detail der Figur 3
und
- Figur 6: ein Detail der Figur 4.

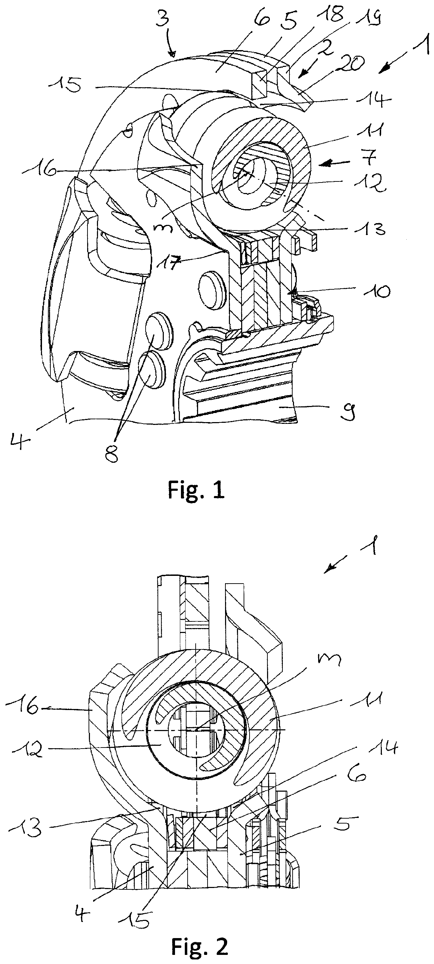

Figur 1 zeigt eine 3D-Teilansicht des Drehschwingungsdämpfers 1 mit dem aus den Scheibenteilen 4, 5 gebildeten Eingangsteil 2 und dem aus dem Flanschteil 6 gebildeten Ausgangsteil 3. Eingangsteil 2 und Ausgangsteil 3 drehen um eine gemeinsame Drehachse und sind gegeneinander entgegen der Wirkung der Federeinrichtung 7 gegeneinander relativ verdrehbar. Die Scheibenteile 4, 5 flankieren das Flanschteil 6 und sind mittels der Abstandsniete 8 in vorgegebenem Abstand miteinander fest verbunden. In dem gezeigten Ausführungsbeispiel ist der Drehschwingungsdämpfer 1 als Kupplungsscheibe ausgebildet beziehungsweise in eine solche integriert. Hierzu ist das Scheibenteil 4 als Deckscheibe ausgebildet und das Scheibenteil 5 trägt radial außen nicht dargestellte Reibbeläge. Das Flanschteil 6 ist drehschlüssig mit der Nabe 9 verbunden. Zumindest über einen Teil des Verdrehwinkels von Eingangsteil 2 und Ausgangsteil 3 gegeneinander ist die Reibeinrichtung 10 wirksam.

Die Federeinrichtung 7 ist aus den über den verteilt angeordneten Druckfederpaketen mit ineinander geschachtelten Druckfedern 11, 12 gebildet. Diese sind in den im nicht verdrehten Zustand von Eingangsteil 2 und Ausgangsteil 3 fluchtenden, in die Scheibenteile 4, 5 und in das Flanschteil 6 eingebrachten Fenstern 13, 14, 15 aufgenommen. Zur axialen Abstützung der Druckfedern 11, 12 sind in dem Scheibenteil 4 erste Abstützungen 16 vorgesehen, die aus den Fenstern 13 ausgestellt sind und mit diesen an den Verbindungen 17 radial innen verbunden bleiben und über die Mittelachse m nach radial außen bogenförmig erstreckt sind. Aufgrund der Anbringung der ersten Abstützungen 16 an der radial inneren Seite der Fenster 13 können diese radial außen offen bleiben, so dass Bauraum für einen derartigen Fensterrahmen gespart wird. Die radiale Abstützung der Druckfedern 11, 12 erfolgt an dem radial äußeren Fensterrahmen 18 des Flanschteils 6 und an dem Fensterrahmen 19 mit nach radial nach innen erweiterten zweiten Abstützungen 20 des Scheibenteils 5, die zugleich eine axiale Abstützung in der den ersten Abstützungen 16 gegenüberliegenden Richtung ausbilden.

Figur 2 zeigt den Drehschwingungsdämpfer 1 im Teilschnitt mit den Scheibenteilen 4, 5 und dem Flanschteil 6 und den in den Fenstern 13, 14, 15 aufgenommenen Druckfedern 11, 12. Aus den Fenstern 13 sind die ersten Abstützungen 16 ausgestellt und bleiben radial innen mit dem Scheibenteil 4 verbunden. Die ersten Abstützungen 16 erstrecken sich, an den Verlauf der Druckfeder 11 angelegt, nach radial außen über die Mittelachse m der Druckfedern 11, 12 hinaus und bilden damit eine axiale und radiale Abstützung für diese.

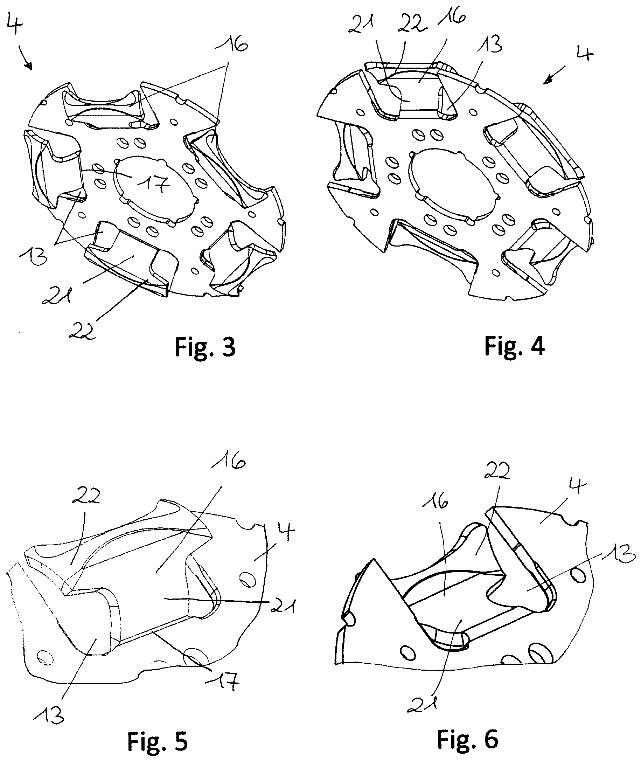

Die Figuren 3 und 5 zeigen eine 3D-Ansicht beziehungsweise ein Detail des Scheibenteils 4 von außen mit über den Umfang verteilten Fenstern 13 und aus diesen ausgestellten und radial innen mit dem Scheibenteil 4 verbunden bleibenden ersten Abstützungen 16. Die radial innen vorgesehene Verbindung 17 der ersten Abstützungen 16 ermöglicht radial außen offen ausgebildete Fenster 13, sodass der Bauraum für einen Fensterrahmen eingespart werden kann. Die ersten Abstützungen 16 sind jeweils aus dem Steg 21 und dem Abstützteil 22 gebildet. Der Steg 21 ist dabei an der Verbindung 17 mit dem Scheibenteil 4 verbunden und das Abstützteil 22 schließt sich an diesen in Umfangsrichtung beidseitig verbreitert an.

Die Figuren 4 und 6 zeigen entsprechend den Figuren 3 und 5 das Scheibenteil 4 von innen mit den Fenstern 13, den ersten Abstützungen 16 mit dem Steg 21 und dem Abstützteil 22.

### Bezugszeichenliste

- 1: Drehschwingungsdämpfer
- 2: Eingangsteil
- 3: Ausgangsteil
- 4: Scheibenteil
- 5: Scheibenteil
- 6: Flanschteil
- 7: Federeinrichtung
- 8: Abstandsniet
- 9: Nabe
- 10: Reibeinrichtung
- 11: Druckfeder
- 12: Druckfeder
- 13: Fenster
- 14: Fenster
- 15: Fenster
- 16: Abstützung
- 17: Verbindung
- 18: Fensterrahmen
- 19: Fensterrahmen
- 20: Abstützung
- 21: Steg
- 22: Abstützteil
- m: Mittelachse

## Patentansprüche

1. Drehschwingungsdämpfer (1) mit einem als Flanschteil (6) ausgebildeten Ausgangsteil (3) und einem aus zwei das Flanschteil (6) flankierenden Scheibenteilen (4, 5) gebildeten Eingangsteil (2) sowie mit einer bei Relativverdrehung von Eingangsteil (2) und Ausgangsteil (3) um eine gemeinsame Drehachse wirksamen Federeinrichtung (7), die aus in dem Flanschteil (6) und in in den Scheibenteilen (4, 5) angeordneten Fenstern (13, 14, 15) untergebrachten Druckfedern (11, 12) gebildet ist, wobei zumindest axial wirksame, erste Abstützungen (16) der Druckfedern (11, 12) eines Scheibenteils (4) aus dem Material der Fenster (13) ausgestellt und radial innen mit dem Scheibenteil (4) verbunden sind, **dadurch gekennzeichnet, dass** die ersten Abstützungen (16) eine Mittelachse (m) der Druckfedern (11, 12) radial übergreifen.

2. Drehschwingungsdämpfer (1) nach Anspruch 1, **dadurch gekennzeichnet, dass** radial äußere, zweite Abstützungen (20) der Druckfedern (11, 12) des anderen Scheibenteils (5) aus den Fenstern (14) radial außen mit dem Scheibenteil (5) verbunden ausgestellt sind.

3. Drehschwingungsdämpfer (1) nach Anspruch 1 oder 2, **dadurch gekennzeichnet, dass** die Fenster (13) des Scheibenteils (4) mit den ersten Abstützungen (16) radial außen offen ausgebildet sind.

4. Drehschwingungsdämpfer (1) nach einem der Ansprüche 1 bis 3, **dadurch gekennzeichnet, dass** mittels eines Streckverfahrens die ausgestellten ersten Abstützungen (16) länger als eine radiale Erstreckung der Fenster (13) geformt sind.

5. Drehschwingungsdämpfer (1) nach einem der Ansprüche 1 bis 4, **dadurch gekennzeichnet, dass** ein endseitiges Abstützteil (22) der ersten Abstützungen (16) in Umfangsrichtung betrachtet breiter als ein diese mit dem Scheibenteil (4) verbindender Steg (21) ist.

6. Drehschwingungsdämpfer (1) nach einem der Ansprüche 1 bis 5, **dadurch gekennzeichnet, dass** zwischen drei und sechs über den Umfang verteilte, jeweils in dem Flanschteil (6) und den Scheibenteilen (4, 5) eingebrachte, Druckfedern (11, 12) aufnehmende Fenster (13, 14, 15) vorgesehen sind.

7. Drehschwingungsdämpfer (1) nach einem der Ansprüche 1 bis 6, **dadurch gekennzeichnet, dass** in einem Fenster (13, 14, 15) jeweils mehrere ineinander geschachtelte Druckfedern (11, 12) angeordnet sind.

8. Drehschwingungsdämpfer (1) nach Anspruch 7, **dadurch gekennzeichnet, dass** zumindest zwei ineinander geschachtelte Druckfedern (11, 12) unterschiedlich lang ausgebildet sind.

9. Drehschwingungsdämpfer (1) nach einem der Ansprüche 1 bis 8, **dadurch gekennzeichnet, dass** der Drehschwingungsdämpfer (1) in einer Kupplungsscheibe angeordnet ist und an zumindest einem Scheibenteil (5) Reibbeläge angeordnet sind.

## Claims

1. Torsional vibration damper (1) having an output part (3) which is configured as a flange part (6) and an input part (2) which is formed from two disc parts (4, 5) which flank the flange part (6), and between a spring device (7) which is active in the case of a relative rotation of the input part (2) and the output part (3) about a common rotational axis and is formed from compression springs (11, 12) which are accommodated windows (13, 14, 15) which are arranged in the flange part (6) and in the disc parts (4, 5), at least axially acting first supports (16) of the compression springs (11, 12) of a disc part (4) being flared from the material of the windows (13) and being connected radially on the inside to the disc part (4), **characterized in that** the first supports (16) reach radially over a centre axis (m) of the compression springs (11, 12).

2. Torsional vibration damper (1) according to Claim 1, **characterized in that** radially outer second supports (20) of the compression springs (11, 12) of the other disc part (5) are flared from the windows (14) in a manner which is connected radially on the outside to the disc part (5).

3. Torsional vibration damper (1) according to Claim 1 or 2, **characterized in that** the windows (13) of the disc part (4) with the first supports (16) are of radially outwardly open configuration.

4. Torsional vibration damper (1) according to one of Claims 1 to 3, **characterized in that** the flared first supports (16) are formed to be longer than a radial extent of the windows (13) by means of a drawing method.

5. Torsional vibration damper (1) according to one of Claims 1 to 4, **characterized in that** an end-side supporting part (22) of the first supports (16) is wider as viewed in the circumferential direction than a web (21) which connects them to the disc part (4).

6. Torsional vibration damper (1) according to one of Claims 1 to 5, **characterized in that** between three and six windows (13, 14, 15) are provided which are distributed over the circumference, are made in each case in the flange part (6) and the disc parts (4, 5) and receive compression springs (11, 12).

7. Torsional vibration damper (1) according to one of Claims 1 to 6, **characterized in that** in each case a plurality of compression springs (11, 12) which are nested inside one another are arranged in one window (13, 14, 15).

8. Torsional vibration damper (1) according to Claim 7, **characterized in that** at least two compression springs (11, 12) which are nested inside one another are configured with different lengths.

9. Torsional vibration damper (1) according to one of Claims 1 to 8, **characterized in that** the torsional vibration damper (1) is arranged in a clutch plate, and friction linings are arranged on at least one disc part (5) .

## Revendications

1. Amortisseur de vibrations de torsion (1) avec une pièce de sortie (3) formée par une partie de bride (6) et une partie d'entrée (2) formée par deux parties de disque (4, 5) flanquant la partie de bride (6) ainsi qu'entre un dispositif élastique (7) actif autour d'un axe de rotation commun lors d'une rotation relative entre la partie d'entrée (2) et la partie de sortie (3), qui est formé par des ressorts de pression (11, 12) logés des fenêtres (13, 14, 15) disposées dans la partie de bride (6) et dans les parties de disque (4, 5), dans lequel des premiers appuis actifs axialement (16) des ressorts de pression (11, 12) d'une partie de disque (4) sont déployés à partir de la matière des fenêtres (13) et sont assemblés radialement à l'intérieur à la partie de disque (4), **caractérisé en ce que** les premiers appuis (16) recouvrent radialement un axe central (m) des ressorts de pression (11, 12).

2. Amortisseur de vibrations de torsion (1) selon la revendication 1, **caractérisé en ce que** des deuxièmes appuis radialement extérieurs (20) des ressorts de pression (11, 12) de l'autre partie de disque (5) sont déployés à partir des fenêtres (14) en étant assemblés radialement à l'extérieur à la partie de disque (5).

3. Amortisseur de vibrations de torsion (1) selon la revendication 1 ou 2, **caractérisé en ce que** les fenêtres (13) de la partie de disque (4) avec les premiers appuis (16) sont de forme ouverte radialement vers l'extérieur.

4. Amortisseur de vibrations de torsion (1) selon l'une quelconque des revendications 1 à 3, **caractérisé en ce que** les premiers appuis déployés (16) sont formés plus longs qu'une extension radiale des fenêtres (13) au moyen d'un procédé d'étirage.

5. Amortisseur de vibrations de torsion (1) selon l'une quelconque des revendications 1 à 4, **caractérisé en ce qu'**une partie d'appui d'extrémité (22) des premiers appuis (16) vue en direction périphérique est plus large qu'une nervure (21) qui les relie à la partie de disque (4).

6. Amortisseur de vibrations de torsion (1) selon l'une quelconque des revendications 1 à 5, **caractérisé en ce qu'**il est prévu entre trois et six fenêtres (13, 14, 15) réparties sur la périphérie, contenant respectivement des ressorts de pression (11, 12) introduits dans la partie de bride (6) et dans les parties de disque (4, 5).

7. Amortisseur de vibrations de torsion (1) selon l'une quelconque des revendications 1 à 6, **caractérisé en ce que** plusieurs ressorts de pression (11, 12) imbriqués l'un dans l'autre sont chaque fois disposés dans une fenêtre (13, 14, 15).

8. Amortisseur de vibrations de torsion (1) selon la revendication 7, **caractérisé en ce qu'**au moins deux ressorts de pression (11, 12) imbriqués l'un dans l'autre sont de longueur différente.

9. Amortisseur de vibrations de torsion (1) selon l'une quelconque des revendications 1 à 8, **caractérisé en ce que** l'amortisseur de vibrations de torsion (1) est disposé dans un disque d'embrayage et des garnitures de friction sont disposées sur au moins une partie de disque (5) .
